# EUROPEAN PATENT SPECIFICATION

(11) **EP 1 562 866 B1**
(45) Date of publication and mention of the grant of the patent: **21.01.2009**
(21) Application number: 03729734.8
(22) Date of filing: 02.06.2003
(51) Int. Cl.: C02F 1/40, E03F 5/16, B01D 17/02, E02B 8/02

(54) **METHOD AND SYSTEM FOR THE SEPARATION OF OILY COMPOUNDS AND SUSPENDED SOLIDS FROM RAINWATER**
VERFAHREN UND VORRICHTUNG ZUR TRENNUNG VON ÖLIGEN VERBINDUNGEN UND SCHWEBSTOFFEN AUS REGENWASSER
PROCEDE ET SYSTEME PERMETTANT DE SEPARER LES COMPOSES HUILEUX ET LES SOLIDES EN SUSPENSION DES EAUX DE PLUIE

(30) Priority: 29.05.2002 BE 200200349
(43) Date of publication of application: 17.08.2005
(73) Proprietor: CB Consult N.V., 9230 Wetteren (BE)
(72) Inventor: BURSSENS, Carl, 9230 Wetteren (BE)
(74) Representative: Van Malderen, Joëlle
(86) International application number: PCT/BE2003/000096
(87) International publication number: WO 2003/099724

(56) References cited:
- WO-A-94/11312
- DE-A- 4 439 627
- DE-A- 19 511 008
- DE-A- 19 618 300
- DE-A- 19 820 259

## Description

### Field of the invention

The present invention is related to a method and system for the separation of water, oily compounds and particles from waste water, in particular from rainwater.

### State of the art

Separators for oily substances and suspended solids are increasingly used to purify water that is contaminated with e.g. hydrocarbons and heavy metals, as is usually the case for rainwater from paved surfaces. Rainwater that is evacuated from e.g. parking lots, streets and airport landing and taxiing strips is usually heavily polluted with these substances, and environmental regulations foresee that these pollutants are removed from waste water before it enters natural waters or public sewage systems.

Known separators are usually conceived on the principle of gravitational separation, where the capacity of the separator (sedimentation efficiency) is determined by the useful surface in the separator which determines the sedimentation speed of suspended particles. Useful surface can be artificially created by disposition of a lamella construction or filter.

Lamella separators were initially used as coalescence separators to separate light fractions (hydrocarbons) from water. More recently, they have been used as separators for suspended solids. As there is a worldwide interest in the problems of wastewater management and purification, lamella separators are being considered because of their high performance and low cost due to smaller size.

The operation of lamella separators requires the soiled water to flow axially through the separator. This requirement is the cause of problems at the influx side. Problems that can be associated with recent lamella separators include:
- Conventional grids used to stop floating particles such as plastics and leaves are too small, resulting in frequent obstruction. In many cases, large automatic grids need to be placed, increasing the overall cost and size significantly.
- The axial flow across the lamellae requires a substantial distance between the first and last lamella. This causes a large head loss, which is responsible for a loss of flux through lamellae distant from the entrance of the separator. Further, a change from a laminar to an undesired turbulent flow regime at the first lamellae can often be observed.
- At the output of the filters, the diameter of the evacuation channel is relatively small. This results in high sweep and reduced sedimentation of suspended solids.
- Only a low space is available for water to flow over the lamellae (under the oils layer), which prevents the build-up of a stable oil layer due to improved mixing of the top layers when a high flux of wastewater is treated, resulting in a significant performance drop.
- Lamella separators clog up easily compared to gravitational separators and require more maintenance.
- Lateral feed of waste water leads to sedimentation in the transit gutter, which results in an uncontrolled flux.

### Aims of the invention

The present invention aims to provide a wastewater separator for separating water, suspended solids and oily compound such as hydrocarbons. It is an object of the present invention to devise such a separator, which does not present the drawbacks of the state of the art. Such separator should have efficient lamella filter irrigation with a controlled influx and have a transit gutter that will not clog up.

### Summary of the invention

The present invention concerns a lamella separator system according to claim 1.

By using the first flow to clean the feed of the main lamella separator, one can keep the feed to the lamella separator homogeneous, since no sedimentation occurs in the transit gutter. By using an overflow, the lamellae can be fed laterally (using the complete available surface efficiently) but homogeneously, with a controlled flux. This allows a lower maintenance needs and higher efficiency for lower installation costs.

The lamella separator system Of the present invention is preferably provided with a feed gutter that transports the main flow to the lamella separator, characterised in that said feed gutter is arranged to limit the flow speed of the main flow at maximum influx to 0,15 m/s.

The lamella separator system of the present invention can use the same or a different lamella separator for treating the first flow and the main flow.

The lamella separator system of the present invention preferably further comprises an automatically cleaned grid (4) arranged to filter particles from the main flow before the main flow reaches the lamella separator.

In an advantageous embodiment, the lamella separator comprises an automatic rinsing system for removing sediment.

Further, the lamella separator system preferably comprises an oil separation system arranged to collect oil from the wastewater in the lamella separator, such as a skimmer to remove oil and hydrocarbons from the surface.

In the lamella separator system of the present invention, the main inlet conduit can be arranged to transport wastewater to a container or to the sewage in case the influx exceeds the maximum influx. This can advantageously be done by dividing the main conduit into a main compartment arranged to transport the maximum influx for the separator system and a removal compartment for transporting wastewater to a container or to the drain, wherein said removal compartment is fed by the overflow of said first compartment.

### Short description of the drawings

Fig. 1 represents an overview of the separator system of the present invention.

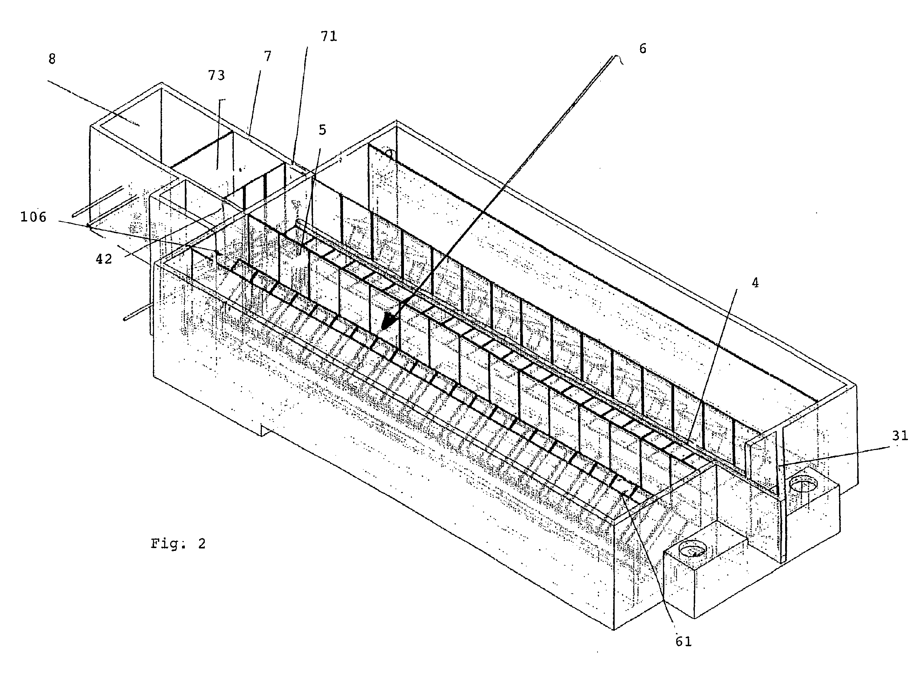

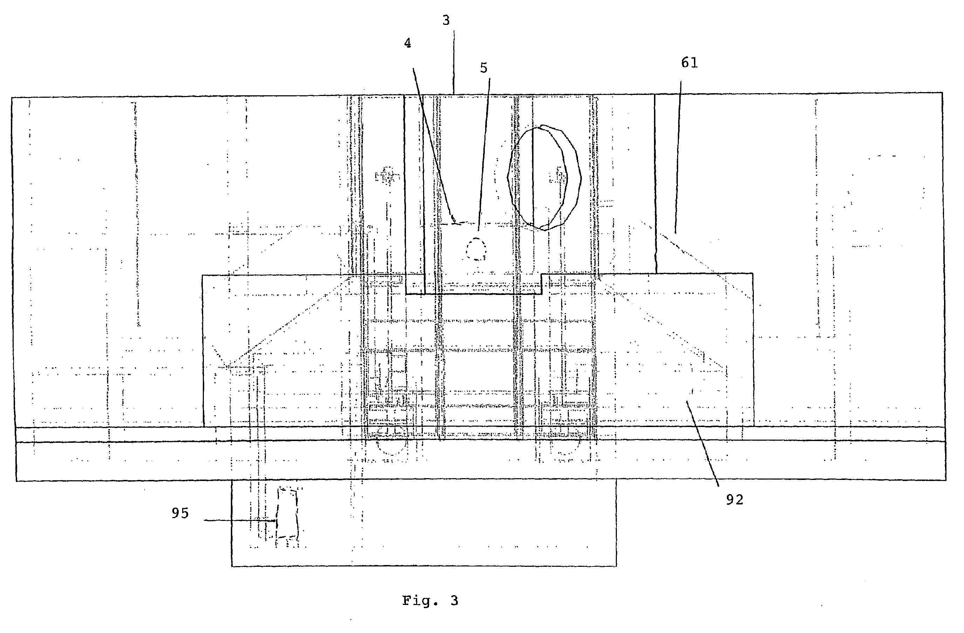

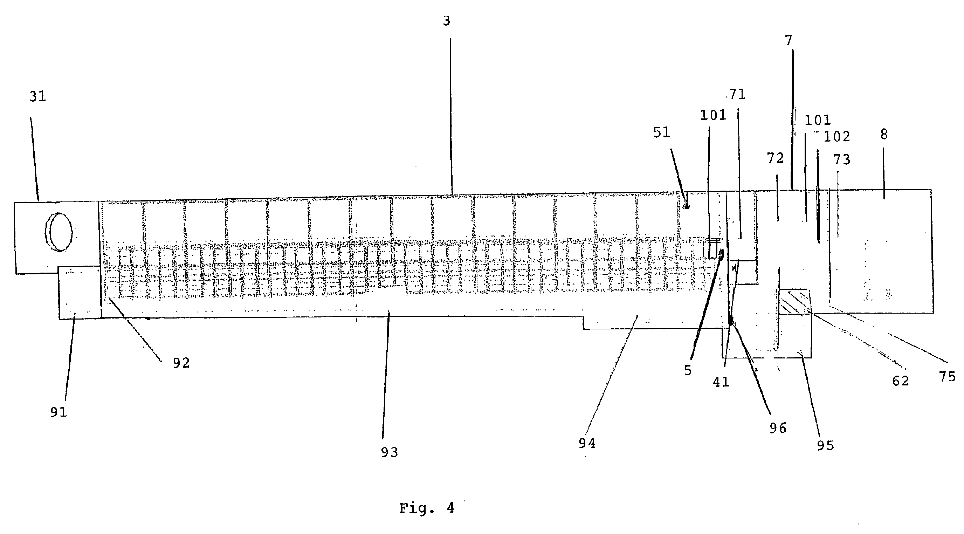

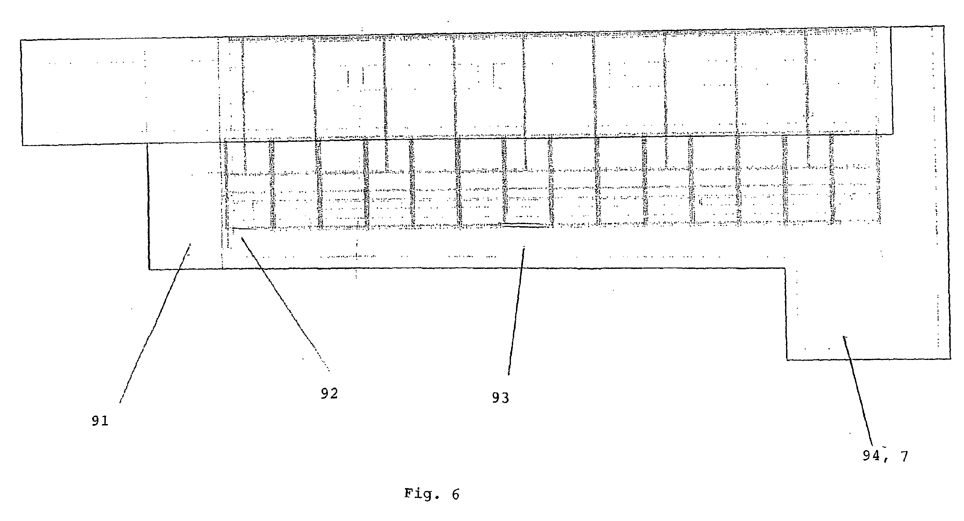

Fig. 2 to 6 show details of an embodiment of the present invention.

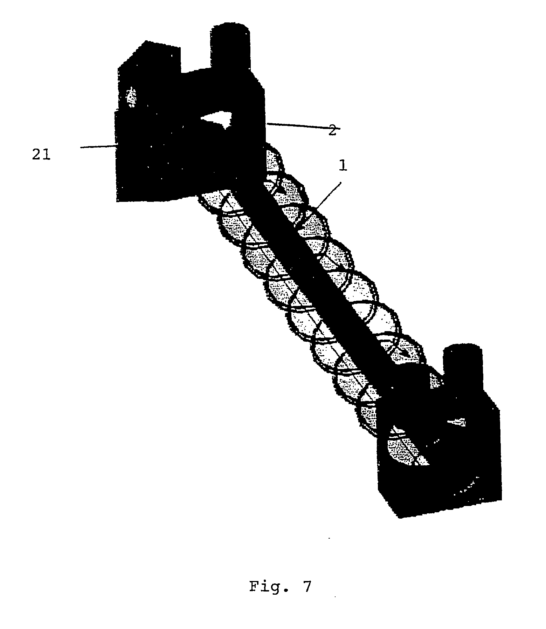

Fig. 7 shows a detail of a main conduit for the separator system according to the present invention.

### Detailed description of the invention

The objects of the present invention are met by the separator as described higher. A laterally fed lamella separator wherein the influx stream is split up in a first flux and a main flux is presented. The first flux is led through the transit gutter gravitationally, and is sufficient to avoid sedimentation in the transit gutter, which therefore is self-cleaning. The first flux is then led via a flow rate controller into either a separate lamella filter compartment or the main lamella filter compartment.

The main flux has to overtop a long overflow channel to arrive in the main lamella filter compartment. This results in a very steady and homogeneous supply for the lamella filter compartment. The main flux preferably passes through a self-cleaning grid before it reaches the lamella filter.

In the feed gutter, the speed of the current is always kept lower than 0,15 m/s in order to allow sedimentation of heavy particles to avoid clogging up the lamella filter compartment. To achieve this result, the width of the feed gutter has to be adapted to achieve this maximal flow speed. Sediments are flushed to the sewage regularly. This reduces the need for maintenance, as the sediment particles cannot resuspend.

Hydrocarbons, which are the lighter fraction, can easily be harvested and collected in a separate compartment for further transport and treatment.

Preferably, the installation is protected from overflowing by suitable means therefore, i.e. an installation that limits the maximum input to the separator. A simple and cost-efficient way of providing such protection is to foresee an overflow system that will release excess water directly to the normal sewage in case the maximum input has been reached. Such provisions are useful for providing for very heavy rainfall in short periods of time, such as during storms.

The invention will now be further clarified by means of an example, describing an embodiment of the present invention.

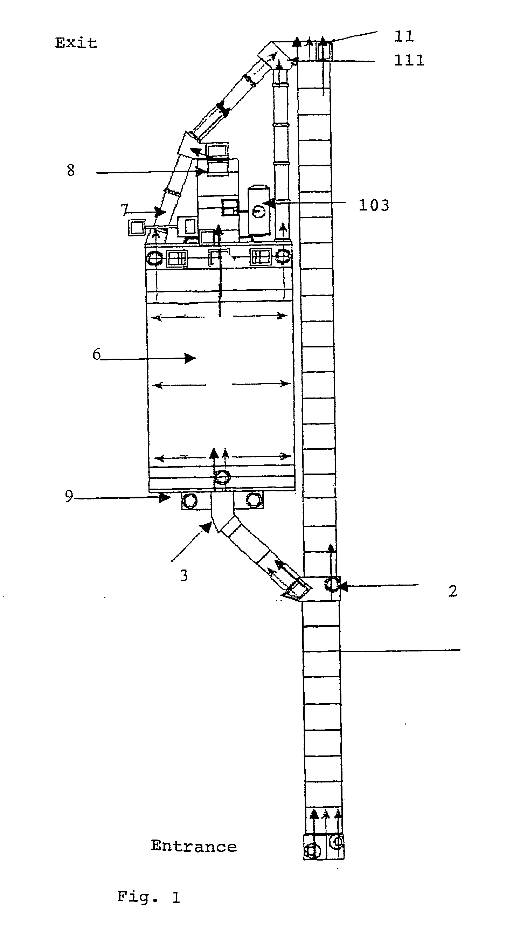

Figure 1 depicts an overall view of the separator according to the present invention. In our example, three working regimes are discussed:
- Low influx when there is little rain or no rain
- Normal influx, when there is medium to high rainfall, and,
- High influx, exceeding the separator's capacity, only occurs very rarely e.g. when storming.

It is obvious that these regimes differ geographically and that the complete installation size further depends on the hard surface area covered. The exact dimensions of the installation and its constituting elements are to be calculated using techniques known by the person skilled in the art.

The water enters the separator at a flow regulator chamber 2 from the main sewage conduit 1. Preferably, this conduit 1 is equipped with an overflow system, which allows avoiding a separator overflow by allowing an overflow of excess water in cases of high influx. The excess water is transported further through the conduit to the sewage mains and does not pass through the separator. This is of course only necessary in case of high influx, when the incoming water flux exceeds the separator's capacity.

The water that enters the separator is led to feed chamber 3 through inlet flow regulator 21, tailored to the calculated separator capacity.

On low influx, there is no need to use the main lamella separator 6. Therefore, the incoming water is led through a transit gutter 32 through feed chamber inlet 31. This flow of water is called the first flow for the purposes of this patent application. The transit gutter allows gravitational transport of the water directly to wastewater pump chamber 7, through first flow regulator 5. Wastewater pump chamber 7 comprises a floating particle collector 71, preferably equipped with a grid 41 that collects floating particles. More advantageously, in larger installations this collector can be equipped with an automatic rake (42). The water is led through floating particle collector 71 to arrive in a small lamella filter chamber 72 provided with a lamella filter 62. The water level in small lamella filter chamber 72 and overflow chamber 73 is always at the level of overflow wall 74. In the small lamella filter chamber 72, suspended solids are allowed to deposit while oil and hydrocarbons such as kerosene will float on top. The sediments are periodically collected and pumped away by wastewater pump 95, while the clean water is allowed to flow via underpass 75 into overflow chamber 73, from where the water can evacuated over overflow wall 74 to the clean water pump chamber 8. The clean water can then be evacuated from there to a clean water collector basin. This is however only done when the system is in a low influx regime, which is detected by a level indicator 51 in the transit gutter.

The oil and hydrocarbons that accumulate in the small lamella filter chamber 72 are harvested with a skimmer 102, that stocks the oils in an oils collector 103. This action is performed every time the oil alarm 104 indicates the presence of hydrocarbons in the small lamella filter chamber 72 and every time before wastewater pump 95 is activated.

On normal influx, the incoming water will overflow the transit gutter 32 and pass through a filtering grid 4 to end up in main lamella chamber 6. Filtering grid 4 is preferably dimensioned to withhold particles that exceed 75% of the smallest passage in the main lamella filter 61. This flow of water is called the main flow for the purposes of this patent application. In the main lamella chamber, the wastewater separates in sediment, clean water and floating hydrocarbons. Hydrocarbons are evacuated through flow regulators 101 to collector 71 after which they arrive in the small lamella filter chamber 72. When oil detector 106 is activated, the separator is automatically closed at closing vent 11. Depending on the sediment volume, the separator can be emptied via valve 91, leaving the sediments in the different compartments. Rinsing valve 92 is opened and rinsing tray 93 is rinsed. The water containing the sediment is then evacuated to the wastewater pump chamber 7, from where it can be pumped away by wastewater pump 95.

Wastewater pump 95 is calculated to automatically clean the exhaust pipe to the DWA collector, in order to avoid maintenance.

On high influx, the separator keeps working as indicated higher for the case of normal influx. However, a part of the wastewater stream cannot be treated and is evacuated through conduit 1 to the sewage. The water that does go to the separator is treated in the same way as explained higher.

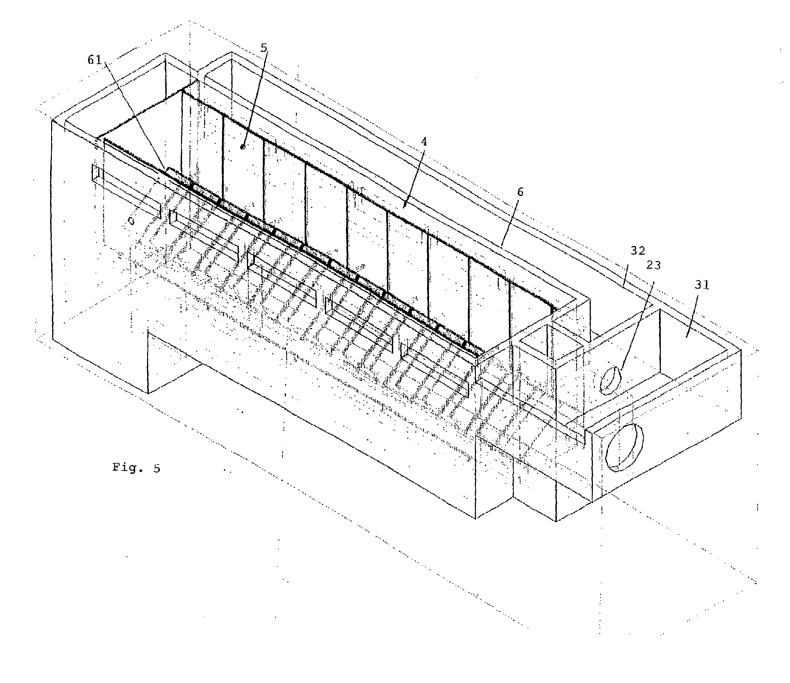

In figure 5, an example of an embodiment is depicted where conduit 1 is replaced by a known overflow collector. There is also no clean water pump and wastewater chamber and pump can be integrated into the separator. However, the basic principle underlying the invention to separate the wastewater in a first and a main flow is maintained.

## Claims

1. A lamella separator system for the separation of suspended solids and/or oily compounds from a wastewater stream, comprising:
• A main inlet conduit (1) guiding the wastewater stream to the separator system,
• An inlet flow regulator (21) arranged to limit the influx to the separator system to a maximum influx,
• A transit gutter (32) arranged for transferring the wastewater stream to a lamella separator,
• A lamella separator (61) arranged for receiving the wastewater and separating said wastewater into water, sediment and oily compounds,
**Characterised in that**:
- said transit gutter is arranged to gravitationally transport a first flow of wastewater to a separator (62) arranged for separating water, suspended solids and oily compounds,
- the separator system comprises a first flow regulator (5) arranged to limit the first flow to a maximal first flow sufficient for cleaning said transit gutter from sediments,
- the transit gutter comprises an overflow arranged to provide a main flow in case the influx exceeds the maximal first flow, said main flow being fed laterally to said lamella separator by overflowing said transit gutter.

2. The lamella separator system as in claim 1, wherein a feed gutter is provided that transports the main flow to the lamella separator, **characterised in that** said feed gutter is arranged to limit the flow speed of the main flow at maximum influx to 0,15 m/s.

3. The lamella separator system as in claim 1 or 2, wherein said separator (62) to which the first flow is transported and the lamella separator (61) to which the main flow is fed are different lamella separators.

4. The lamella separator system as in claim 1 or 2, wherein said separator (62) to which the first flow is transported and the lamella separator (61) to which the main flow is fed are the same lamella separator.

5. The lamella separator system as in any of the claims 1 to 4, wherein the system further comprises an automatically cleaned grid (4) arranged to filter particles from the main flow before the main flow reaches the lamella separator.

6. The lamella separator system as in any of the claims 1 to 5, wherein the lamella separator comprises an automatic rinsing system for removing sediment.

7. The lamella separator system as in any of the claims 1 to 6, comprising an oil separation system arranged to collect oil from the wastewater in the lamella separator.

8. The lamella separator system as in any of the claims 1 to 7, wherein the main inlet conduit is arranged to transport wastewater to a container or to the sewage in case the influx exceeds the maximum influx.

9. The lamella separator system as in claim 8, wherein the main conduit is divided into a main compartment arranged to transport the maximum influx for the separator system and a removal compartment for transporting wastewater to a container or to a drain, wherein said removal compartment is fed by the overflow of said first compartment.

## Patentansprüche

1. Lamellenseparatorsystem für die Abtrennung suspendierter Feststoffe und/oder öliger Verbindungen aus einem Abwasserstrom, umfassend:
• eine Hauptzuleitung (1), die den Abwasserstrom zu dem Separatorsystem führt,
• einen Zustromregulator (21), der zum Begrenzen des Zustroms zu dem Separatorsystem auf einen maximalen Zustrom eingerichtet ist,
• eine Durchgangsrinne (32), die zur Beförderung des Abwasserstroms zu einem Lamellenseparator eingerichtet ist,
• einen Lamellenseparator (61), der zur Aufnahme des Abwassers und zur Trennung des Abwassers in Wasser, Sediment und ölige Verbindungen eingerichtet ist,
**dadurch gekennzeichnet, dass**
- die Durchgangsrinne so eingerichtet ist, dass sie einen ersten Abwasserstrom durch Schwerkraft zu einem Separator (62) befördert, der zur Trennung von Wasser, suspendierten Feststoffen und öligen Verbindungen ausgebildet ist,
- das Separatorsystem einen ersten Strömungsregulator (5) umfasst, der zum Begrenzen des ersten Stroms auf einen maximalen ersten Strom eingerichtet ist, der ausreichend ist zum Reinigen der Durchgangsrinne von Sedimenten,
- die Durchgangsrinne einen Überlauf enthält, der dazu eingerichtet ist, einen Hauptstrom bereitzustellen, wenn der Zustrom den maximalen ersten Strom übersteigt, wobei der Hauptstrom seitlich zu dem Lamellenseparator geleitet wird, indem die Durchgangsrinne überläuft.

2. Lamellenseparatorsystem nach Anspruch 1, wobei eine Zuleitungsrinne eingerichtet ist, die den Hauptstrom zu dem Lamellenseparator befördert, **dadurch gekennzeichnet, dass** die Zuleitungsrinne dazu ausgebildet ist, die Strömungsgeschwindigkeit des Hauptstroms bei maximalem Zustrom auf 0,15 m/s zu begrenzen.

3. Lamellenseparatorsystem nach Anspruch 1 oder 2, wobei der Separator (62), zu dem der erste Strom befördert wird, und der Lamellenseparator (61), zu dem der Hauptstrom geleitet wird, verschiedene Lamellenseparatoren sind.

4. Lamellenseparatorsystem nach Anspruch 1 oder 2, wobei der Separator (62), zu dem der erste Strom befördert wird, und der Lamellenseparator (61), zu dem der Hauptstrom geleitet wird, derselbe Lamellenseparator sind.

5. Lamellenseparatorsystem nach einem der Ansprüche 1 bis 4, wobei das System des Weiteren ein automatisch gereinigtes Gitter (4) umfasst, das zum Filtern von Partikeln aus dem Hauptstrom eingerichtet ist, bevor der Hauptstrom den Lamellenseparator erreicht.

6. Lamellenseparatorsystem nach einem der Ansprüche 1 bis 5, wobei der Lamellenseparator ein automatisches Spülungssystem zum Entfernen von Sediment umfasst.

7. Lamellenseparatorsystem nach einem der Ansprüche 1 bis 6, umfassend ein Ölabtrennungssystem, das zum Sammeln von Öl aus dem Abwasser in dem Lamellenseparator eingerichtet ist.

8. Lamellenseparatorsystem nach einem der Ansprüche 1 bis 7, wobei die Hauptzuleitung dazu eingerichtet ist, Abwasser zu einem Behälter oder zu dem Schmutzwasser zu befördern, wenn der Zustrom den maximalen Zustrom überschreitet.

9. Lamellenseparatorsystem nach Anspruch 8, wobei die Hauptleitung geteilt ist in eine Hauptkammer, die dazu eingerichtet ist, den maximalen Zustrom für das Separatorsystem zu befördern, und eine Entsorgungskammer, die Abwasser zu einem Behälter oder zu einem Abfluss befördert, wobei die Entsorgungskammer mit dem Überlauf der ersten Kammer gespeist wird.

## Revendications

1. Un système de séparation à lamelles pour séparer des solides en suspension et/ou des composés huileux d'un flux d'eaux usées, comprenant :
• une conduite d'admission principale (1) guidant le flux d'eaux usées vers le système de séparation,
• un régulateur de débit d'admission (21) conçu pour limiter l'afflux vers le système de séparation à un afflux maximum,
• une rigole de transit (32) conçue pour transférer les eaux usées vers un séparateur à lamelles,
• un séparateur à lamelles (61) conçu pour recevoir les eaux usées et séparer lesdites eaux usées en eau, sédiment et composés huileux,
**caractérisé en ce que** :
• ladite rigole de transit est conçue pour transporter par gravité un premier flux d'eaux usées vers un séparateur (62) conçu pour séparer l'eau, les solides en suspension et les composés huileux,
• le système de séparation comporte un premier régulateur de débit (5) conçu pour limiter le premier flux à un premier flux maximal suffisant pour enlever les sédiments de ladite rigole de transit,
• la rigole de transit comporte un trop-plein conçu pour fournir un flux principal au cas où l'afflux excède le premier flux maximal, ledit flux principal étant alimenté latéralement vers ledit séparateur à lamelles en débordant de ladite rigole de transit.

2. Système de séparation à lamelles selon la revendication 1, dans lequel est prévu une rigole d'alimentation qui transporte le flux principal vers le séparateur à lamelles, **caractérisé en ce que** ladite rigole d'alimentation est conçue pour limiter la vitesse de flux du flux principal à un afflux maximum de 0,15 m/s.

3. Système de séparation à lamelles selon la revendication 1 ou 2, dans lequel ledit séparateur (62) vers lequel le premier flux est transporté et le séparateur à lamelles (61) vers lequel le flux principal est alimenté constituent des séparateurs à lamelles distincts.

4. Système de séparation à lamelles selon la revendication 1 ou 2, dans lequel ledit séparateur (62) vers lequel le premier flux est transporté et le séparateur à lamelles (61) vers lequel le flux principal est alimenté constituent le même séparateur à lamelles.

5. Système de séparation à lamelles selon l'une quelconque des revendications 1 à 4, dans lequel le système comprend en outre une grille à nettoyage automatique (4) conçue pour filtrer les particules du flux principal avant que le flux principal n'atteigne le séparateur à lamelles.

6. Système de séparation à lamelles selon l'une quelconque des revendications 1 à 5, dans lequel le séparateur à lamelles comprend un système de rinçage automatique pour l'enlèvement du sédiment.

7. Système de séparation à lamelles selon l'une quelconque des revendications 1 à 6, comprenant un système de déshuilage conçu pour collecter l'huile des eaux usées dans le séparateur à lamelles.

8. Système de séparation à lamelles selon l'une quelconque des revendications 1 à 7, dans lequel la conduite d'admission principale est conçue pour transporter les eaux usées vers un conteneur ou vers les égouts dans le cas où l'afflux excède l'afflux maximum.

9. Système de séparation à lamelles selon la revendication 8, dans lequel la conduite principale est divisée en un compartiment principal conçu pour transporter l'afflux maximum vers le système de séparation et un compartiment d'enlèvement pour transporter les eaux usées vers un conteneur ou un drain, dans lequel ledit compartiment d'enlèvement est alimenté par le trop-plein dudit premier compartiment.
